Europäisches Patentamt

European Patent Office

Office européen des brevets

(11) Numéro de publication : **0 024 966**
**B1**

(12) **FASCICULE DE BREVET EUROPÉEN**

(45) Date de publication du fascicule du brevet :
**16.02.83**

(21) Numéro de dépôt : **80401114.6**

(22) Date de dépôt : **28.07.80**

(51) Int. Cl.³ : **B 02 C  7/17**, B 29 H 19/06

(54) **Procédé et dispositif de broyage de caoutchouc.**

(30) Priorité : **21.08.79 FR 7921032**

(43) Date de publication de la demande :
**11.03.81 Bulletin 81/10**

(45) Mention de la délivrance du brevet :
**16.02.83 Bulletin 83/07**

(84) Etats contractants désignés :
**AT BE CH DE FR GB IT LI LU NL SE**

(56) Documents cités :
**FR A 798 339**
**FR A 2 385 511**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur : **Contal, François**
**14, bd Edouard Rey**
**F-38000 Grenoble (FR)**
Inventeur : **Maissin, Jacques**
**3, Allée Maurice Ravel**
**F-38130 Echirolles (FR)**

(74) Mandataire : **Leclercq, Maurice et al**
**L'AIR LIQUIDE SOCIETE ANONYME POUR L'ETUDE ET L'EXPLOITATION DES PROCEDES GEORGES CLAUDE 75, Quai d'Orsay**
**F-75321 Paris Cedex 7 (FR)**

Jouve, 18, rue St-Denis, 75001 Paris, France

Procédé et dispositif de broyage de caoutchouc

La présente invention concerne le traitement de caoutchouc vulcanisé qui, en vue d'une régénération pour une nouvelle opération de vulcanisation ou autre utilisation, doit être désagrégé en particules relativement fines, ce qui s'effectue par broyage.

On connaît déjà (FR-A-798.339) des dispositifs de broyage à deux plateaux dentés coopérant face contre face, dont l'un est fixe, et l'autre entraîné à rotation, avec une alimentation centrale au travers dudit plateau fixe de produits à broyer, et évacuation périphérique vers l'aval des produits broyés, selon lequel on injecte entre deux plateaux et en une position radiale intermédiaire un fluide réfrigérant qui est de l'air, au moyen d'au moins un injecteur traversant le plateau fixe. Ce genre de dispositif de broyage peut théoriquement être utilisé pour broyer du caoutchouc, mais l'expérience montre qu'il se produit à certains endroits du broyage des surchauffes, qui sont préjudiciables à la bonne tenue chimique et physique du produit ainsi traité, et l'on a constaté, à l'expérience, que le débit d'air injecté *in situ* entre les plateaux, ne peut être en aucun cas suffisant pour réduire les surchauffes en question, car ce débit est nécessairement très limité.

Un objet de l'invention est de prévoir un procédé de broyage du type sus-mentionné, où cet inconvénient est éliminé et où la température du caoutchouc au cours de son passage dans le broyeur ne subit aucune augmentation anormale.

Un autre objet de l'invention est un procédé de broyage où les inconvénients liés à la présence de l'oxygène de l'air, ou de l'ozone formé au niveau du broyage, sont écartés.

Dans le procédé de broyage selon l'invention, on utilise, à titre de fluide réfrigérant, de l'azote liquide qui se vaporise et s'écoule en majorité radialement vers l'aval, que l'on injecte à un débit tel que ses effets sur le caoutchouc traité sont réduits à une simple limitation de l'élévation de température.

La position radiale de l'injecteur d'azote liquide est déterminée de façon suffisamment précise pour que les vapeurs d'azote qui se produisent au niveau de l'injection soient en majorité dirigées radialement vers l'aval à co-courant vers la périphérie du broyeur pour accompagner, et éviter son échauffement trop prononcé, le produit en cours de fin de traitement. De la sorte, on obtient non seulement l'effet souhaité d'un accroissement réduit de la température du caoutchouc, qui rend l'opération tout à fait réalisable, sans détérioration sérieuse du produit, d'autre part un inertage du caoutchouc en cours de broyage qui évite toute oxydation, comme cela se produisait précédemment avec l'oxygène de l'air. Il y a lieu de noter que l'on a déjà utilisé (FR-A-2385.511) l'azote liquide pour broyer des matières élastiques, mais cette façon de faire était fort différente en ce sens que l'azote liquide était essentiellement utilisé pour refroidir le produit à une température très basse de fragilisation. Tel n'est pas le cas selon la présente invention, où l'on veut éviter essentiellement une élévation de température telle qu'elle soit préjudiciable à la qualité du caoutchouc traité.

L'injecteur d'azote liquide comprend un tube enveloppé à distance d'un manchon d'isolation thermique et dans le cas où l'on a à faire à un dispositif de broyage où le plateau fixe est associé à une chambre annulaire de refroidissement à circulation d'eau, cet injecteur d'azote liquide traverse la chambre de refroidissement et est monté de façon étanche par son manchon d'isolation thermique sur la paroi en regard de la chambre et du plateau.

Les caractéristiques et avantages de l'invention ressortiront d'ailleurs de la description qui suit en référence aux dessins annexés dans lesquels :

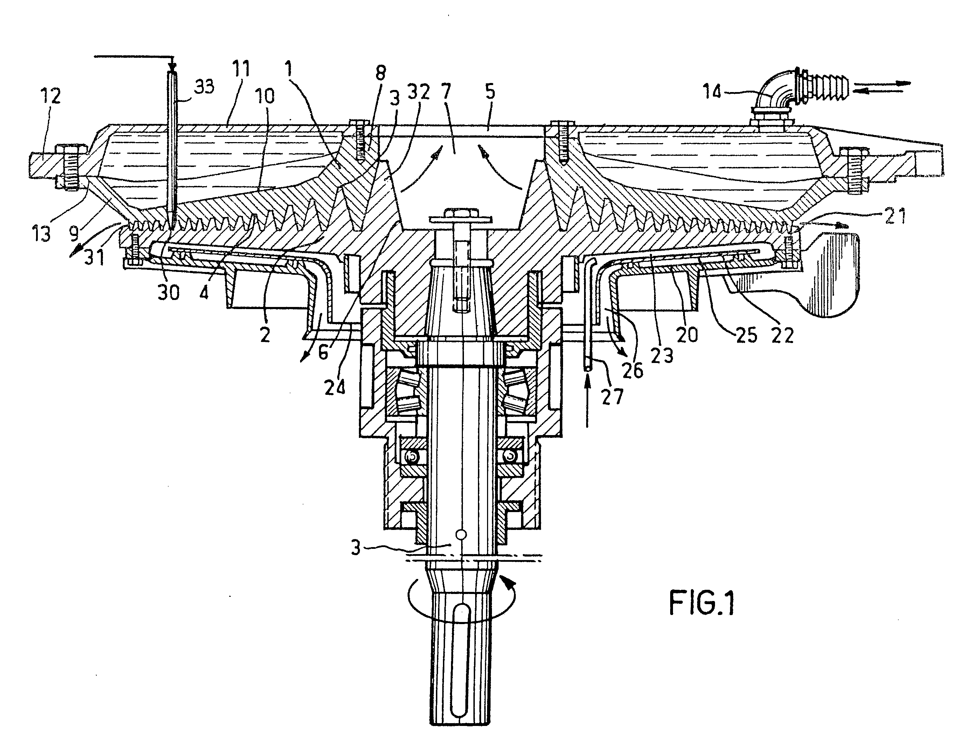

la figure 1  est une vue en coupe axiale d'un broyeur selon l'invention ;

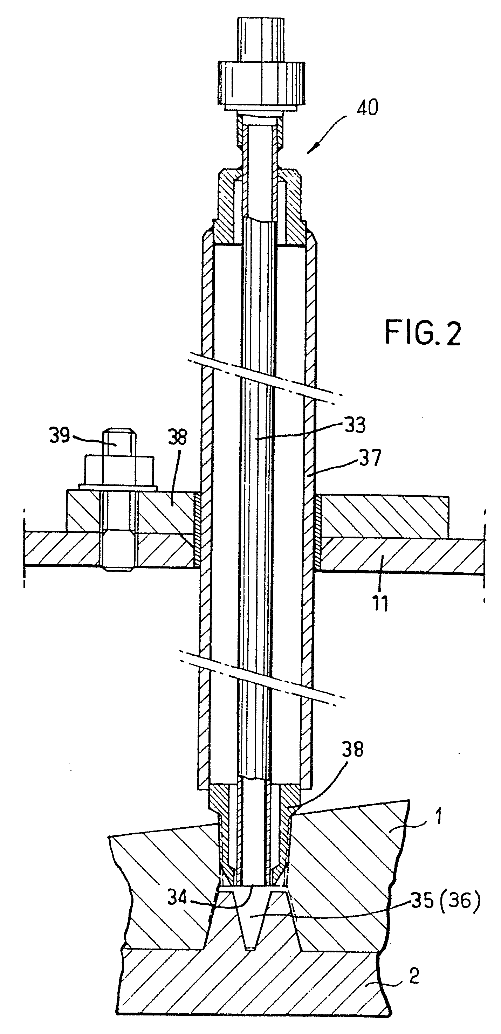

la figure 2  est, à l'échelle agrandie, une coupe longitudinale d'un injecteur selon l'invention.

En se référant aux dessins annexés, un dispositif de broyage selon l'invention comporte, dans un carter non représenté, un plateau fixe 1 solidaire dudit boîtier et un plateau rotatif 2 entraîné à rotation par un arbre 3 dont le moteur n'a pas été représenté. Les deux plateaux fixe 1 et rotatif 2 présentent une pluralité de couronnes de dents respectivement 3 et 4, qui sont agencées chacune de façon à pénétrer étroitement dans l'espace interstitiel entre deux dents voisines de l'autre plateau. Le plateau fixe 1 présente un évidement central 5 en regard d'un large dégagement également axial 6 ménagé dans le plateau rotatif 2. L'évidement axial 5 et le dégagement axial 6 servent de chambre d'introduction 7 pour la matière à broyer, à savoir du caoutchouc divisé en morceaux grossiers.

Des moyens de réfrigération à eau sont ménagés de part et d'autre des plateaux fixe 1 et rotatif 2 et l'on détaille ci-après deux de ces moyens.

Au-dessus du plateau fixe 1, qui présente une partie axiale de forte épaisseur 8 et une partie périphérique de faible épaisseur 9 est ménagée une chambre qui est délimitée par la face supérieure 10 du plateau fixe 1 et par un flasque 11 qui vient se fermer par un rebord périphérique 12 sur un rebord périphérique 13 du plateau fixe 1. Une double conduite d'amenée et d'évacuation d'eau de refroidissement 14 est ménagée pour introduire et soutirer l'eau de refroidissement.

De même en dessous du plateau rotatif 2 est ménagé, solidairement avec ce plateau rotatif 2, un flasque 20 fixé de façon étanche à la périphérie du rebord périphérique 21 du plateau rotatif 2. Ce flasque 20 supporte, à son intérieur, un voile 22 permettant de ménager un passage radialement divergent 23 s'ouvrant à l'extérieur par une ouverture 24 et un passage radialement convergent 25 débouchant à l'extérieur par une ouverture 26. Au travers de l'ouverture 24 et en partie dans le passage 23 est agencée une conduite fixe de projection d'eau 27, dont l'extrémité supérieure est orientée radialement, en sorte que de l'eau de refroidissement projetée par ladite conduite 27 peut s'écouler d'ailleurs sous l'effet de la force centrifuge d'abord de façon radialement divergente dans la canalisation 23, puis ensuite de façon radialement convergente dans le passage 25 pour déboucher et s'évacuer au travers de l'ouverture 26.

En outre, et selon l'invention, en une zone 30 qui est située à distance de la couronne de dents 31 périphériquement extérieure et de la couronne de dents intérieure 32 est ménagé un injecteur d'azote liquide qui se présente sous la forme d'un tube 33 équipé d'un raccord 40 à une source non représentée d'azote liquide et qui débouche en 34 dans l'espace interstitiel entre deux dents 35 et 36 d'une couronne de dents du plateau fixe 1.

Ce tube d'alimentation en azote liquide 33 est enveloppé à distance par un manchon 37 qui emprisonne un volume de gaz faisant office d'isolant thermique. Ce manchon 37 en acier inoxydable est engagé d'une façon étanche d'une part au travers du flasque 11, d'autre part présente une extrémité 38 en forme d'embout fileté qui se visse dans un taraudage du plateau fixe 1. L'étanchéité au niveau inférieur est assurée par ce filetage, tandis qu'au niveau supérieur un joint d'étanchéité approprié est placé entre le flasque 11 et un plateau de serrage 38 fixé par des tirants 39 au flasque 11. On comprend que la disposition de l'injecteur d'azote liquide permet, si elle est judicieusement choisie en position radiale qu'une partie très substantielle, voire la quasi-totalité des vapeurs d'azote, qui sont développées immédiatement dans la zone 30, se dirigent radialement à l'aval vers la périphérie vers la couronne extérieure de dents 31, tandis qu'une très faible partie, voire une partie tout à fait négligeable, se dirige radialement à l'amont vers la couronne intérieure de dents 32. Il se produit donc sur toute la zone radiale en aval de l'injecteur un effet de réduction de l'élévation de température résultant des effets intenses de friction et de cisaillement opérés par les dents sur le caoutchouc. La zone d'introduction d'azote liquide 30 doit être avantageusement choisie au voisinage immédiat de l'endroit où cette température est (sans l'intervention de l'azote liquide) la plus élevée, mais également en un endroit tel que l'on obtienne un écoulement prédominant du flux gazeux radialement vers l'aval.

Les essais entrepris ont montré qu'on obtient d'excellents résultats en injectant une quantité d'azote liquide qui est de l'ordre de 0,3 litre par kilogramme de caoutchouc traité et cela dans un injecteur unique. Avantageusement, on maintient une certaine dépression à la sortie du broyeur, par exemple une dépression de 0,018 bar (0,018 10⁵ pa) ce qui favorise encore l'écoulement vers l'aval des vapeurs d'azote.

L'invention s'applique essentiellement au broyage de caoutchouc usagé et permet sa réutilisation tous usages et en particulier pour de nouvelles opérations de vulcanisation.

**Revendications**

1. Procédé de broyage de caoutchouc ou analogue mettant en œuvre deux plateaux dentés coopérant face contre face, dont l'un est fixe et l'autre entraîné à rotation, avec une alimentation centrale au travers dudit plateau fixe de produits à broyer et évacuation périphérique vers l'aval de produits broyés, selon lequel on injecte entre les deux plateaux et en une position radiale intermédiaire un fluide réfrigérant au moyen d'au moins un injecteur traversant le plateau fixe, caractérisé en ce qu'on utilise à titre de fluide réfrigérant et de façon connue en soi, de l'azote liquide qui se vaporise et s'écoule en majorité radialement vers l'aval, et que l'on injecte à un débit tel que ses effets sur le caoutchouc traité sont réduits à une simple limitation de l'élévation de sa température.

2. Procédé de broyage selon la revendication 1, caractérisé en ce qu'on injecte de l'ordre de 0,3 litre d'azote liquide par kilogramme de caoutchouc traité.

3. Dispositif de broyage de caoutchouc ou analogue dans lequel deux plateaux de broyage dentés (1) et (2) coopèrent face contre face, dont l'un (1) est fixe et l'autre (2) entraîné à rotation, avec une chambre d'alimentation axiale (7) au travers du plateau fixe (1) et au moins un injecteur (33) s'étendant au travers du plateau fixe (1) et débouchant en regard du plateau rotatif (2), agencé en une position radiale intermédiaire, caractérisé par un injecteur d'azote liquide (33) comprenant un tube enveloppé à distance d'un manchon d'isolation thermique (37).

4. Dispositif de broyage selon la revendication 3, dans lequel le plateau fixe (1) est associé à une chambre annulaire (10-11) de refroidissement à circulation d'eau (14), caractérisé en ce que l'injecteur d'azote liquide (33) traverse ladite chambre et est monté de façon étanche (en 38) dans la paroi (11) et par son embout (38) dans le plateau (1).

**Claims**

1. Process for crushing caoutchouk or the like comprising two indented disks cooperating face to face the one of which is fixed and the other driven for rotation, further comprising a central supply of products to be comminuted through said fixed disk and peripheral discharge of comminuted products downstream, according to which a refrigerant is injected between the two disks and a radial intermediate position by means of at least an injector traversing the fixed disk, characterized by that liquid nitrogen is used as refrigerant and in a manner known per se vaporizing and discharging essentially radially downstream, and that an amount is injected such that the effects thereof on the treated caoutchouk are reduced to a simple limitation of the elevation of its temperature.

2. Process for crushing according to claim 1, characterized by that liquid nitrogen is injected in the order to 0,3 liter per kilogram treated caoutchouk.

3. Apparatus for crushing caoutchouk or the like in which two comminuting indented disks (1) and (2) cooperate face to face, the one (1) of which is fixed and the other (2) is driven for rotation, comprising an axial supply chamber (7) through the fixed disk (1) and at least one injector (33) extending through the fixed disk (1) and opening opposite to the rotatable disk (2) located in a radial intermediate position, characterized by an injector of liquid nitrogen (33) comprising a tube enveloped with a distance by a socket of thermal insulation (37).

4. Apparatus for crushing according to claim 3, in which the fixed disk (1) is associated to an annular cooling chamber (10-11) with water circulation (14), characterized by that the injector for liquid nitrogen (33) traverses said chamber and is mounted in a tight manner (at 38) within the wall (11) and by the transition piece (38) thereof within the disk (1).

**Ansprüche**

1. Verfahren zum Zerkleinern von Kautschuk oder dergleichen unter Verwendung von zwei verzahnten Scheiben, die Fläche gegen Fläche zusammenwirken, deren eine fest ist und deren andere zur Drehung angetrieben ist, mit einer zentralen Beschickung für zu zerkleinernde Produkte durch die feste Scheibe und mit einer Umfangsentleerung für die zerkleinerten Produkte zur Abstromseite, wobei zwischen die zwei Scheiben und in einer radialen Zwischenstellung ein Kühlmittel mittels mindestens einer Einspritzeinrichtung durch die feste Scheibe eingespritzt wird, dadurch gekennzeichnet, daß man als Kühlmittel in an sich bekannter Weise flüssigen Stickstoff verwendet, der hauptsächlich radial zur Abstromseite verdampft und abläuft, und daß eine solche Menge eingespritzt wird, daß seine Wirkungen auf den behandelten Kautschuk auf eine einfache Begrenzung seiner Temperaturerhöhung reduziert werden.

2. Verfahren zum Zerkleinern nach Anspruch 1, dadurch gekennzeichnet, daß flüssiger Stickstoff in der Größenordnung von 0,3 l pro kg behandelten Kautschuks eingespritzt wird.

3. Vorrichtung zum Zerkleinern von Kautschuk oder dergleichen, in welcher zwei verzahnte Zerkleinerungsscheiben (1) und (2) Fläche gegen Fläche zusammenwirken, von denen die eine (1) fest ist und die andere (2) zur Drehung angetrieben ist, mit einer axialen Beschickungskammer (7) durch die feste Scheibe (1) und mit wenigstens einer Einspritzeinrichtung (33), die sich durch die feste Scheibe (1) erstreckt und gegenüber der drehbaren Scheibe (2) mündet und in einer radialen Zwischenposition angeordnet ist, gekennzeichnet durch eine Einspritzeinrichtung (33) für flüssigen Stickstoff, die ein Rohr aufweist, welches im Abstand von einer Wärmeisolierhülse (37) umhüllt ist.

4. Zerkleinerungsvorrichtung nach Anspruch 3, bei welcher die feste Scheibe (1) einer Ringkammer (10-11) zur Kühlung mit Wasserumlauf (14) zugeordnet ist, dadurch gekennzeichnet, daß die Einspritzeinrichtung für flüssigen Stickstoff (33) durch diese Kammer hindurchgeht und dichtend (bei 38) in der Wand (11) und durch ihr Ansatzstück (38) in der Scheibe (1) angebracht ist.

FIG.1

0 024 966

FIG.2

40

39

38

33

37

11

38

34

35 (36)

1

2